# EUROPEAN PATENT APPLICATION

(11) **EP 1 764 973 A1**
(43) Date of publication of application: **21.03.2007**
(21) Application number: 05461003.5
(22) Date of filing: 16.09.2005
(51) Int. Cl.: H04L 29/06

(54) **Method for referencing remote element of content, method for providing content with remote elements and system for distributing content**

(71) Applicant: ADVANCED DIGITAL BROADCAST S.A., 1218 Grand-Saconnex (CH)
(72) Inventor: Gajda, Marcin, 68-219 Tuplice (PL)
(74) Representative: Hudy, Ludwik

(57) **Abstract**

A system for distributing content to client applications in a networked environment encloses a base content host having an application server providing base content responsively to requests from client applications. The base content (242) comprises at least one special element, referenced by a special locator pointing to a special content (252), the special locator generated by a special locator generator (243) of the base content host (240). The special locator distinguishes by a special locator host domain name consisting of a sequence of characters of which at least one is randomly generated, followed by an existing top level domain name. Apart from the base content host (240) the system comprises at least one special content host (250) having a special content host IP address and comprising an application server (251) providing the special content (252), responsively to requests from client applications. Furthermore, the system comprises a DNS host (230) having a DNS server (231) handling a domain including a top level domain name of the special locator host domain name and a special locator handler (232) resolving IP addresses for host domain names not recognized by the DNS server (231) and returning a special content host IP address for the host domain names not recognized by the DNS server (231).

## Description

### DESCRIPTION

A networked environment, such as the Internet, allows communication between hosts connected at network nodes. The hosts may be computing machines, such as personal computers, mainframe computers, handheld terminals or digital television set-top boxes. The hosts may operate various kinds of software, including user agents and application servers. The application servers provide various services to the user agents (also called client applications). For example, a web pages server, such as an Apache HTTP server, may provide web pages content (for example, in html format) to a browsing agent (for example, Internet Explorer or Mozilla). The application server may be integrated with, or cooperate with network applications, for example a PHP script for generating web page content.

There are various methods for addressing hosts in networked environments. For example, the Internet uses IP addresses and host domain names. An IP address is a unique number assigned to a particular network node. For example, in IPv4 addressing, an IP address is a 4-octet number, which may be presented as a four-element sequence such as 198.65.142.169. A host domain name is a more human-legible unique sequence of characters, including a local part and a domain name, such as www.companyname.com. The last part of the host domain name, for example "com", is a top-level domain. The parts preceding the top-level domain are sub-level domains, for example "companyname.com".

A Domain Name System (DNS) holds associations between the host domain names and IP addresses of network nodes. The DNS is handled by DNS servers of various levels, such as top-level domain DNS servers and sub-level domain DNS servers. A DNS server may hold data related to several top-level domains or sub-domains. A client application may send a request to a DNS server for resolving an IP address for a particular domain name. The DNS server checks if it handles the domain, and if not, redirects the request to another server, until a server handling the domain is found.

Content provided by an application server to a client application often includes a number of elements. The elements may be local elements, i.e. elements transmitted as a part of the content, or remote elements, i.e. elements referenced by locators to content to be provided individually, by the same or another application server. A popular type of locator used in the Internet is a Uniform Resource Locator (URL). A typical URL comprises a communication protocol identifier, a host domain name of the application server and a path specifying the particular content, for example http://www.companyname.com/home_page/index.html.

Client applications operating at some user hosts may be integrated with content blocking applications, whose purpose is blocking specific locators. For example, a content blocking application may be configured to block all locators pointing to advertising servers, basing on a list of advertising servers host domain names stored in a local dictionary of locators. Content blocking may be undesirable by some content providers. For some free-of-charge content providers, such as news information providers, attaching additional advertising content can be the only method of making their activity profitable. Content blocking applications may be also undesirable by the user. Although blocking some unwanted content, they may sometimes block important special messages, such as emergency messages, sent from a specific location.

Therefore, there exists a need for an improved method of referencing content, which would be immune to current content blocking methods based on a dictionary of locators.

The essence of the invention is that in a method for referencing a remote element of content in a networked environment, at least one remote element with a status of a special element is located within the content. The special element is to be referenced by a special locator, which comprises a special locator host domain name consisting of a sequence of characters of which at least one is randomly generated, followed by an existing top level domain name. To reference the special element, the special locator is generated and provided for the special element.

The special locator can be generated according to a template defining the placement of constant and random characters of the special locator.

Preferably, some of the constant characters of the special locator define a sub-level domain name and/or form a word existing in a language dictionary.

The special locator host domain name can be followed by a path defining a particular content.

It is of special advantage that the path is the sequence of characters of which at least one is randomly generated.

According to the present invention there is provided a networked environment content with a plain sub-content related to at least one plain local element and/or plain remote element and generated by an application server responsively to a request from a user application, and a special sub-content related to at lease one remote element referenced by a special locator having a special locator host domain name consisting of a sequence of characters of which at least one is randomly generated, followed by an existing top level domain name.

Another object of the present invention is method for providing content with remote elements by an application server in response to a request for a base content from a client application in a networked environment, the method is performed by identifying the structure of the requested base content, identifying at least one of the remote elements as a special element, providing a special locator as a reference to each special element, the special locator comprising a special locator host domain name consisting of a sequence of characters of which at least one is randomly generated, followed by an existing top level domain name and providing the special locator to the client application.

The structure of the requested base content can be identified by a predefined base content template assigned to a specific request or dynamically by a script.

The method for providing content with remote elements can be further performed by caching data related to special locators generated in response to requests from particular sources and providing the cached special locator when a special locator is to be provided in response to a request from a source for which a special locator is cached.

The method for providing content with remote elements can be yet performed by caching data related to special locators generated for particular special elements and providing the cached special locator when a special locator is to be provided for a special element for which a special locator is cached.

Another object of the present invention is a system for distributing content to client applications in a networked environment that comprises a base content host having an application server providing base content responsively to requests from client applications, at least one special content host having a special content host IP address and comprising an application server providing the special content responsively to requests from client applications and a DNS host having a DNS server handling a domain including a top level domain name of the special locator host domain name and a special locator handler resolving IP addresses for host domain names not recognized by the DNS server and returning a special content host IP address for the host domain names not recognized by the DNS server. The base content comprises at least one special element that is referenced by a special locator generated by a special locator generator of the base content host, the special locator comprising a special locator host domain name consisting of a sequence of characters of which at least one is randomly generated, followed by an existing top level domain name.

Preferably, there is a plurality of special content hosts, each having a different IP address, and the special content host IP address for host domain names not recognized by the DNS server is selectably from a set of addresses.

In the special locator handler of the DNS host, the host domain name can be analyzed and if a reference to a specific special content server is found therein, the IP address of the referenced special content server is returned.

In the special locator handler of the DNS host, data related to IP addresses resolved for requests from particular sources can be cached, and when an IP address is to be resolved in response to a request from a cached source, the cached IP address would be returned.

Also, in the special locator handler of the DNS host, data related to IP addresses resolved for particular host domain names can be cached, and when an IP address is to be resolved for a cached host domain name, the cached IP address would be returned.

The invention will now be described by way of example and with reference to the accompanying drawings in which:
Fig. 1 presents an exemplary content in a form of a web page;
Fig. 2 presents a system for distributing content in a networked environment;
Fig. 3 presents a flowchart of communication between a client application and servers;
Fig. 4 presents a detailed structure of a base content host;
Fig. 5 presents a method for referencing a remote element of content;
Fig. 6 presents a first exemplary embodiment of operation of a base content server;
Fig. 7 presents a second exemplary embodiment of operation of a base content server;
Fig. 8 presents a method for generating special locators; and
Fig. 9 presents a method of operation of a DNS server and a special locator handler.

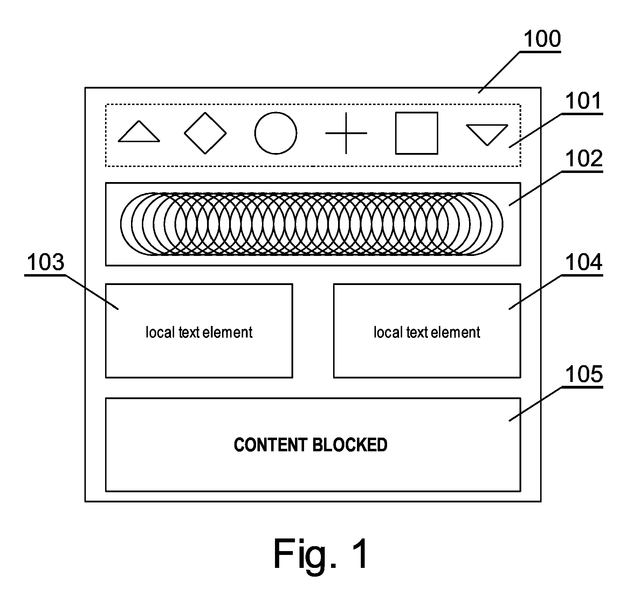

Fig. 1 presents an exemplary content in a form of a web page 100. The page 100 contains a row of buttons 101, two graphics banners 102, 105 and two local text elements 103, 104. The graphical representations of the buttons 101 are remote elements referenced by specific URLs, pointing to the same host on which the web page base content is located. Therefore, such elements are not blocked by any content blocking application, since their source is the same as the source of the web page. The graphics banner 105 is referenced by a URL pointing to a remote host, being an advertisement server known to a content blocking application. The blocking application blocks all content from that host, therefore a message is displayed in place of the banner 105, that the content is blocked. In contrast, the graphics banner 102, being a special element, is referenced using a method according to the present invention, i.e. by a special locator as described later. The special element could be also the whole web page. The special locator is undetectable by present content blocking applications, therefore the graphics to which the locator points are downloaded from the special content host and displayed on the screen. The content presented in Fig. 1 is shown as an example only and does not limit other content examples presented in the later part of this description.

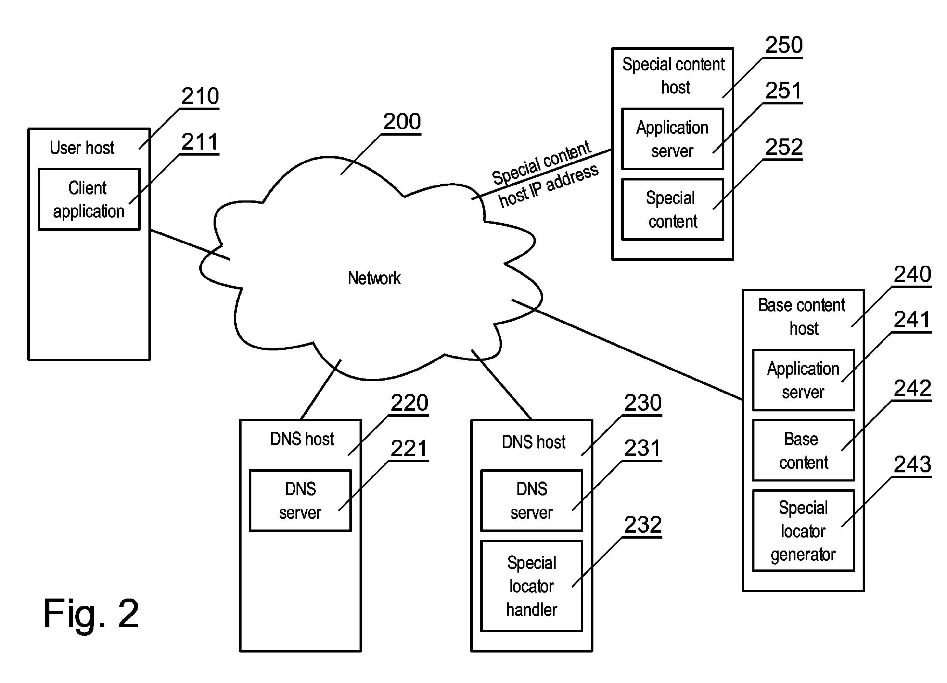

Fig. 2 presents a system for distributing content in a networked environment, for example the Internet. There are many hosts operating within the network. One exemplary host of each type relevant to the invention has been shown in the drawing: a user host 210, two DNS hosts 220, 230, a base content host 240 and a special content host 250. Alternatively, one host may serve a plurality of functions, for example may be both a base content host and a special content host, or any other combination of two or more hosts.

The user host 210 may be a personal computer, a hand-held terminal, a digital television set-top box or another type of computing device. It operates a client application receiving content from the network. The client application may be an Internet web pages browser, a messenger, a RSS reader, or any other application using network content. The client application requests content from content hosts referenced by locators.

The first DNS host 220 operates a DNS server 221 handling the domain of the base content host 240.

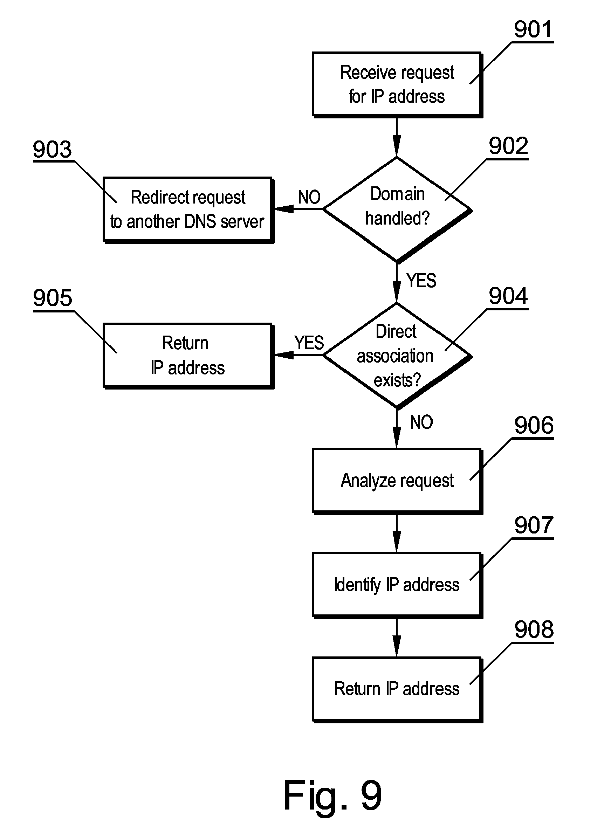

The second DNS host 230 operates a DNS server 231 handling the domain including the top-level domain name of the special locator. This can be a top-level domain name server or a sub-level domain name server. If a host domain name is not recognized by the DNS server, it is treated as a special locator host domain name and handled by a special locator handler 232, which returns an IP address of the special content host for special locator host domain names. The operation of this DNS server is described in more details in Fig. 9.

In a specific embodiment, there may be a single server operating the domain of the base content host 240 and that of the special locator host domain name, especially in case of a top-level domain server. In contrast, in case there are several types of special locators used, those special locators may be handled by different DNS servers with special locator handlers, each handling to a particular domain name. A number of DNS servers may be operated by a single host.

The base content host 240 operates an application server 241 providing a base content 242 responsively to requests from client applications. The base content 242 may include local and/or remote elements. At least one of the remote elements is a special element, which is referenced by a special locator. The special locators are generated in the base content host 240 by a special locator generator 243. The special locator comprises a special locator host domain name consisting of a sequence of characters of which at least one is randomly generated, followed by an existing top-level domain name.

The special content host 250 operates an application server 251, which provides a special content 252 responsively to requests from client applications. The application server 251 of the special content host 250 may operate similarly to the application server 241 of the base content host 240. The special content 252 may be composed of local and/or remote elements, similarly to the base content 242. In particular, the special content 252 may include special elements. In case the special content 252 includes special elements, the special content host 250 includes a special locator generator, which is not shown in the drawing for clarity purposes.

The special content host 250 is identified by a special content host IP address. The IP address may change dynamically, according to the operation of the DNS server as described in Fig. 9. The difference between a base content host 240 and the special content host 250 is in the way they are referenced by locators - the base content host 240 is located by a typical locator host domain name (which can be resolved by a typical DNS server), while the special content host 250 is located by a special locator host domain name (which can be resolved by the special locator handler at the DNS server). In addition, the special content host 250 may be identified by a typical host domain name. The special content host 250 may be also identified by a typical host domain name.

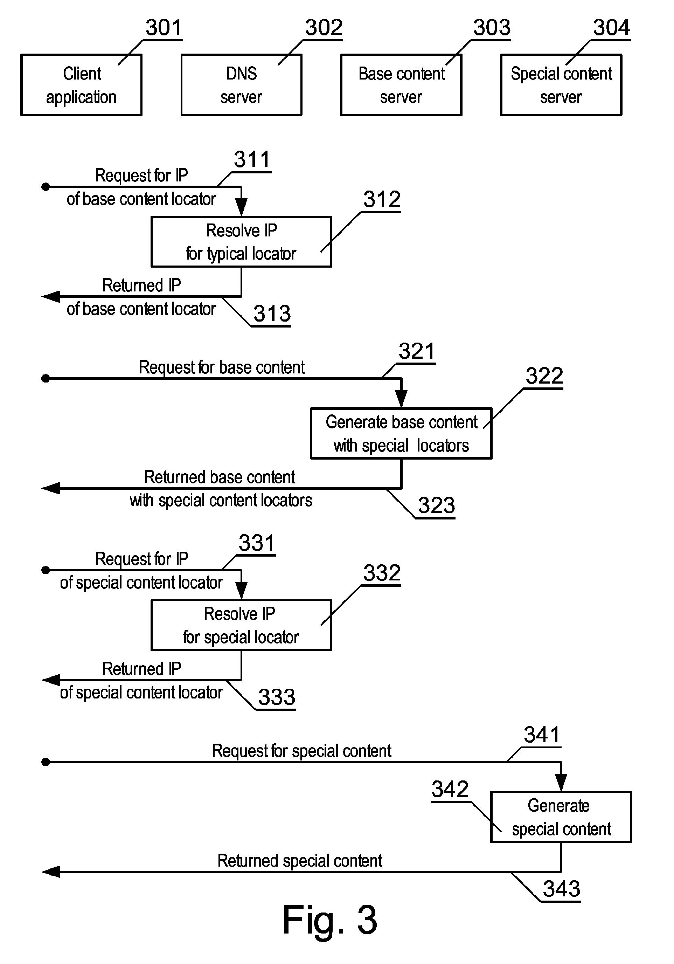

Fig. 3 presents a flowchart of communication between the client application 301 and servers, i.e. the DNS server 302, the base content server 303 and the special content server 304, while reading a specific base content. To simplify the drawing, it is assumed that the DNS server 302 handles the domain of the base content locator and of the special content locator.

First, the client application sends a request in step 311 to the DNS server for an IP address of a base content locator host domain name. The DNS server resolves the IP address in step 312 for the base content locator host domain name, which is a typical host domain name, i.e. the DNS server comprises a direct relation between the particular host domain name and the corresponding IP address. The IP address is returned in step 313 to the client application. In this example it is assumed that the request was directed to a DNS server, which handles the host domain name of the base content locator. If not, it would redirect the request to a higher-level DNS server.

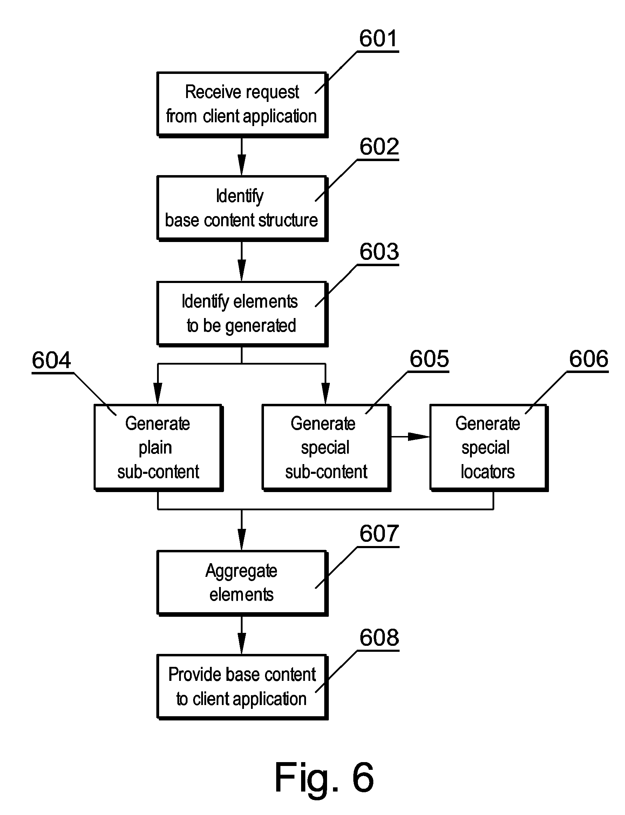

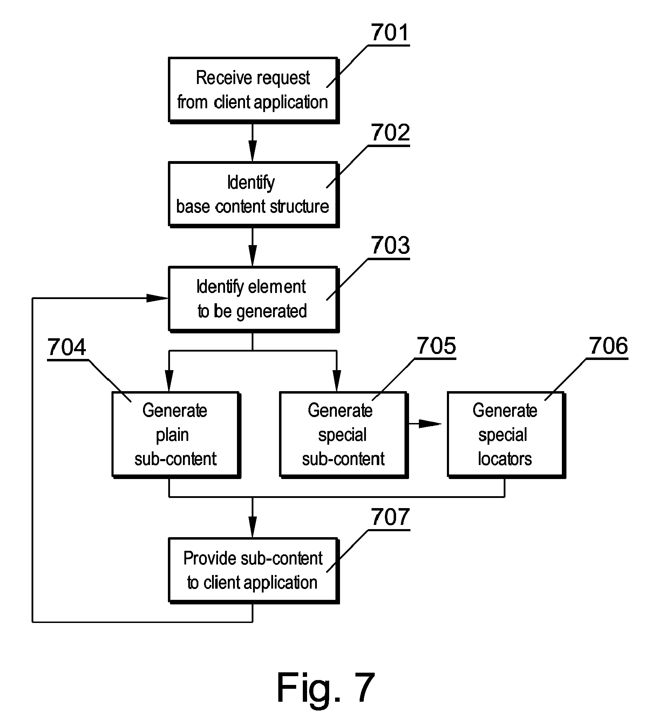

Having received the IP address for the base content locator host domain name, the client application sends a request in step 321 for a base content to a base content server, defined by the received IP address. The base content server generates the base content in step 322, according to the procedures shown in Fig. 6 and Fig. 7. The requested base content, including remote elements referenced by special locators, is returned to the client application in step 323.

Next, the application requests the remote elements of the base content in step 331, similarly to requesting the base content itself. It is worth noting that the client application is unaware of the type of content it requests, i.e. whether a particular remote element is a typical remote content or a special content, since the type of the locator is defined by the DNS server. Therefore, for each remote element, the application sends requests to a DNS server for resolving the IP address of a particular host domain name in step 332. The application may locally cache the resolved IP addresses to avoid sending unnecessary DNS requests.

In case the DNS server receives a request for a host domain name including a domain name handled by that DNS server, but the full host domain name is not recognized, it is identified as a special locator host domain name and passed to the special locator handler. The special locator handler returns an IP address for the special locator host domain name to the client application in step 333.

The IP address for the special locator host domain name is returned to the client application in a typical way, similarly to an IP address for a typical host domain name. Therefore, the application is unaware of the type of the locator. Having received the IP address of the special content server, the client application sends a request for content to that server in step 341. The special content server generates the requested content in step 342 and returns it to the client application in step 343.

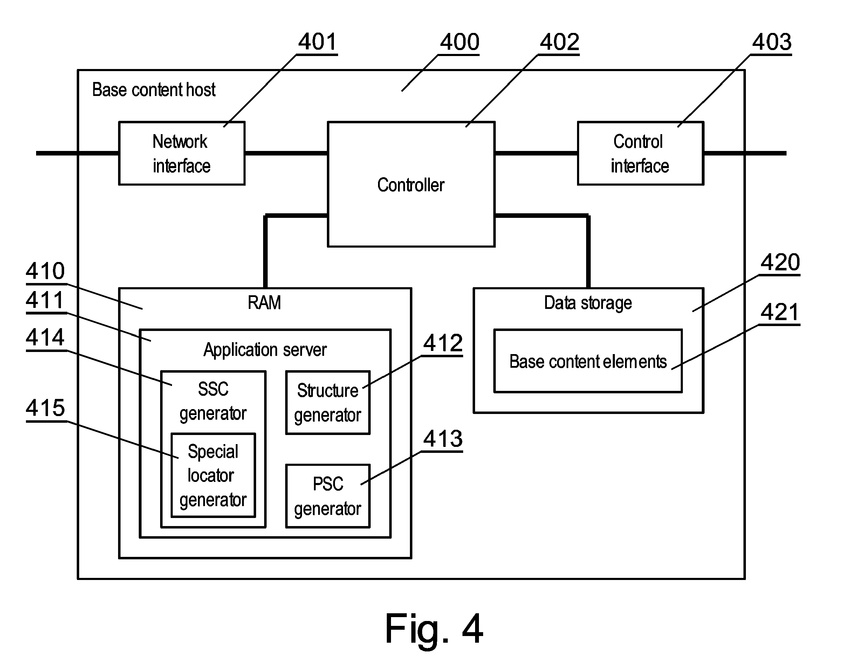

Fig. 4 presents a detailed structure of a base content host 400. The host 400 is a computing machine comprising a number of elements, and the drawing shows only the elements most important for implementing the invention. The host 400 may include other elements characteristic to a particular computing machine. The elements have been shown as functional blocks.

The base content host 400 comprises a network interface 401, for example an Ethernet interface, for communicating with the networked environment. The network interface 401 is connected to a controller 402, which coordinates the operation of the host 400. The host 400 also comprises a control interface 403 connected to the controller 402, through which the operation of the controller 402 may be configured. The control interface 403 may comprise a keyboard interface, a mouse interface, a voice input interface, a remote controller interface, a networked control interface (for configuring the controller 402 from a remote network host), and/or other control interfaces. The controller 402 operates various kinds of software executed in the RAM memory 410. The host 400 may also comprise data storage 420, such as a hard disk, a non-volatile memory block, and/or other data storage type. In addition, or alternatively to the data storage 420, the host 400 may comprise an interface to an external data storage, such as a CD or DVD disk, a data storage controlled by a remote network host, and/or other external data storage type. The data storage 420 stores base content data 421, such as html base content templates or elements to be transmitted as local elements in the base content.

The software executed in the RAM memory 410 includes an application server 411. The application server 411 comprises a structure generator 412 for providing the structure of a base content according to a request received from a client application, a plain sub-content PSC generator 413 for providing sub-content related to typical local or remote elements, a special sub-content SSC generator 414 for providing sub-content related to special elements and special locator generator 415 for generating special locators. In the presented embodiment, the application server 411 is implemented in software executed in the RAM memory 410 of the controller 402. However, other implementations are possible, such as executing the software in a remote location, or a hardware implementation of some or all of the functionality.

The structure generator 412 provides the structure of the base content arranged to a specific grammar, which will be described using the Backus-Naur form (BNF):
BC ::= PSC SSC PSC
PSC ::= ASCII PSC | ε
SSC ::= PSC SSC PSC SL PSC SSC PSC |
   PSC SSC PSC SL PSC |
   PSC SL PSC SSC PSC |
   PSC SL PSC
SL ::= SLHOSTNAME SLPATH
SLHOSTNAME ::= ASCII SLHOSTNAME | RANDOM SLHOSTNAME|
   RANDOM ENDSEQ
ENDSEQ ::= ASCII ENDSEQ | ε
SLPATH ::= ASCII SLPATH | ε

The BC item is the base content. The base content is composed of sub-content of two types, namely plain sub-content PSC item and special sub-content SSC item.

The plain sub-content PSC item is a string of ASCII characters of arbitrary length. The PSC item may also be an empty sequence (ε), and in a special case, the BC may be composed only of SSC items. The PSC item may represent one or more plain, i.e. not special, local or remote elements, as well as any data describing the elements, such as html tags.

The special sub-content SSC item represents special elements, i.e. remote elements referenced by a special locator SL item. Each SSC item may represent one or more special elements. Each SL item in an SSC item may be preceded by and/or followed by a PSC item, for example data describing the element, such as html tags.

The special locator SL item references a special element by a special locator host domain name (SLHOSTNAME) item and a special locator path (SLPATH) item. The SLPATH item may be optional.

The special locator host domain name SLHOSTNAME item is composed of ASCII characters, of which at least one is a RANDOM item, ending with an ENDSEQ item, which is composed of ASCII characters. In case there is more than one RANDOM item in the SLHOSTNAME item, the RANDOM items may be adjacent or separated by defined ASCII characters. The SLHOSTNAME item may also comprise a protocol identifier (for example, "http://") used to transmit the special content. The SLHOSTNAME item ends with an existing, i.e. handled by at least one DNS server in the networked environment, top level domain name.

The RANDOM item is a random ASCII character generated by a random character generator, which is a part of the special locator generator.

The special locator path SLPATH item refers to a particular content at the special content host. The SLPATH item may be a defined sequence of characters. Optionally, at least one character of the SLPATH item may be randomly generated (not shown in the BNF description for simplicity). Furthermore, the SLPATH item may be optional, i.e. the SL item may include only the SLHOSTNAME item.

An exemplary base content (in this example, html-formatted) may have the following structure:
1. <html>
2. <img src="http://existentdomain.com/a1.jpg">
3. <img src="http://randomly-generateddomain1.com/a2.jpg">
4. <img src="http://a3randomly-generateddomain2.subdomain.com">
5. </html>

The line numbers have been added to clarify the description. The base content includes an html opening tag (line 1), locators of three images (lines 2, 3, 4) and an html closing tag (line 5). The first image locator refers to a known host domain name "existentdomain.com", which is handled in a typical way. The following two image locators refer to randomly generated host domain names. A DNS server handling the ".com" domain will resolve an IP address of the "randomly-generateddomain1.com" host domain name, from which the "a2.jpg" image will be read. A DNS server handling the "subdomain.com" domain will resolve an IP address of the "a3randomly-generateddomain2.subdomain.com" host domain name, from which a default content will be read, since the locator does not include any path to a specific content. Referring to the base content grammar, the structure of the base content presented above may be described as follows:
BC = PSC1 + SSC1 + PSC2
PSC1 = <html>
PSC2 = </html>
SSC1 = PSC11 + SL11 + PSC12 + SL12 + PSC13
PSC11 = <img src="http://existentdomain.com/a1.jpg"> <img src=
SL11 = "http://randomly-generateddomain1.com/a2.jpg"
PSC12 = > <img src=
SL12 = "http://a3randomly-generateddomain2.subdomain.com"
PSC13 = >

The above structure is presented as an example only. The sub-content items may be presented in other way, especially the PSC items might have been combined into one item.

The SLHOSTNAME item may have several forms. It may be a random sequence followed by an existing top-level domain name, such as "RRRRR.com" (where "R" represents a random character). Alternatively, it may be a random sequence followed by an existing top-level domain and one or more sub-domain names, such as "RRRRR.companyname.com". Using a popular top level or sub-level domain guarantees that the special locator will not be blocked by a content blocking application at the user host, since that would require blocking all content from that domain, which would be undesirable by the user. Furthermore, the SLHOSTNAME item may contain a known string (for example, a word existing in a language dictionary), such as "RRRitem.com", which may prevent the locator to be classified as totally random. The SLHOSTNAME item may also comprise an identifier to be used by a DNS server to resolve a specific IP address for that special locator host domain name, for example "RRRserver1.com", as described in more details in Fig. 9.

The format of the SLHOSTNAME item may be stored in a host name template, the template defining the placement of constant and random characters of the SLHOSTNAME item to be generated.

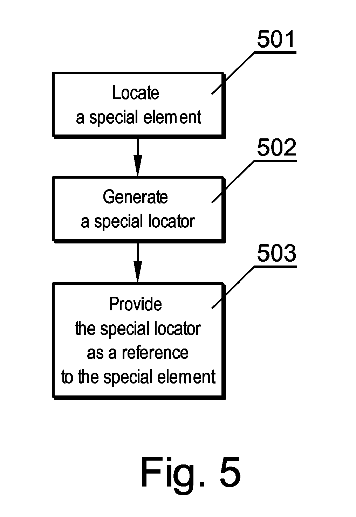

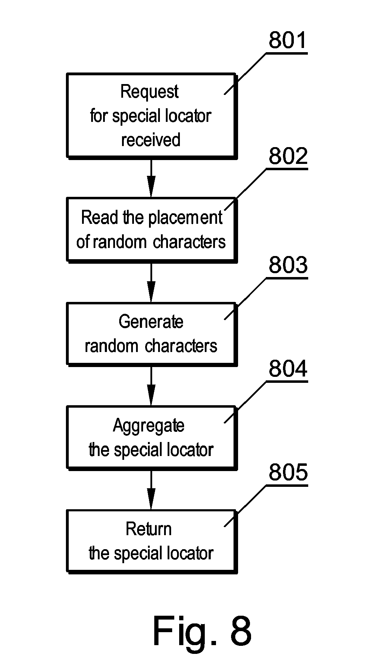

A method for referencing a remote element of content as described above is shown in Fig. 5. In the first step 501, a special element, i.e. a remote element with a status of a special element, is located within the content. The special element is an element to be referenced by a special locator comprising a special locator host domain name consisting of a sequence of characters of which at least one is randomly generated, followed by an existing top level domain name. Then, in step 502, the special locator is generated for that remote element, according to the procedure shown in Fig. 8. Finally, in step 503, the special locator is provided as a reference to the remote element.

The method of providing a base content to a client application may depend on the type of content and the type of a base content server. Two exemplary embodiments of the base content server operation will be presented. The described functionality refers to generating a base content including a special locator. The application server may also generate, in response to certain requests, a base content which does not include special locators, but generation of such content may be performed using typical methods and is not the subject of this invention.

A first exemplary embodiment of operation of the base content server is presented in Fig. 6. The procedure is activated upon receiving a request from a client application in step 601. The request is analyzed and a structure of the requested base content is identified in step 602. For example, the base content to be generated may have an html page format, to be based on a predefined base content template assigned to a specific request. Next, the elements to be generated are identified in step 603. In particular, in step 603 it is identified which remote elements are special elements, to be referenced by special locators. The base content template may include a special tag informing about the placement of a special element, and possible properties of their special locators. For example, the tag may have the following structure:
<SL> RRRdomain.com/RRa1.jpg </SL>
where the "R" characters specify the places in which a random character is to be generated. Next, in steps 604-606 the sub-content data of the base content are generated. These may be plain sub-content PSC generated in step 604 and/or special sub-content SSC generated in step 605, for which special locators are generated in step 606. After the sub-content is generated, the whole base content is aggregated, by joining individual sub-contents in step 607, and provided to the client application in step 608.

A second exemplary embodiment of operation of the base content server is presented in Fig. 7. The procedure is activated upon receiving a request from a client application in step 701. The request is analyzed and a structure of the requested base content is identified in step 702. For example, the base content to be generated may be a sequence of characters adopted for the needs of a specific client application, including a special element referenced by a special locator. The way in which the sequence is dynamically generated may be defined by a locally or remotely stored script, for example a PHP script, or may be an internal functionality of the application server. The script may dynamically identify the individual local and/or remote elements of the content to be generated and the order of their generation, together with any additional data describing the elements. In case of special elements, the script may generate a special locator of a predefined structure, similarly as described in procedure of Fig. 6. Each element to be generated is identified in step 703 according to the script and generated in steps 704-606. Plain sub-content PSC is generated in step 704 and special sub-content SSC is generated in step 705, together with generating special locators in step 706, as described in more details in Fig. 8. After each sub-content defined by the script is generated, it is provided to the client application in step 707, and the following sub-content to be generated is identified in step 703, until the whole base content is generated.

The two embodiments presented above are to be understood as non-limiting and exemplary only. The methods for providing content according to the invention share the common steps of identifying at least one of the remote elements as a special element, providing a special locator as a reference to that element, and providing the special locator to the client application. Other methods of providing base content with special locators may be developed on the basis of this concept, which will not depart from the main concept of the invention.

The application server of the base content host may cache data related to special locators generated in response to requests from particular sources. When a special locator is to be provided in response to a request from a source for which a special locator is cached, the application server may provide the cached special locator instead of generating a new one.

In another embodiment, the application server of the base content host may cache data related to special locators generated for particular special elements. When a special locator is to be provided for a special element for which a special locator is cached, the application server may provide the cached special locator instead of generating a new one.

Such caching procedures may prevent the client applications from recognizing that the locator returned in response to a request includes randomly generated characters.

Fig. 8 presents a method for generating special locators, operated by the special locator generator, executed while generating special sub-content of the base content. The method is activated by a request from a SSC generator to generate a special locator in step 801. Such request may be specified, for example, by an html base content template or by a step of a script. The request includes a special locator template, which specifies the constant characters of the special locator and the position of random characters. In step 802 the placement of random characters is read. The random characters are generated in step 803. The special locator is aggregated, i.e. the constant and random characters are combined into one sequence in step 804, and returned to the SSC generator in step 805.

Fig. 9 presents a method of operation of a DNS server and a special locator handler. Steps 901-905 are performed by the DNS server, and steps 906-908 are performed by the special locator handler. Upon receiving, in step 901, a request for resolving an IP address of a specific host domain name, the DNS server checks, in step 902, if it handles the domain of that host domain name. If not, the request is redirected to another DNS server in step 903. If so, the server checks, in step 904, if there exists a direct reference to an IP address for the received host domain name. If so, the IP address is returned to the client application in step 905. If not, the host domain name is passed to the special locator handler. It is analyzed in step 906 to extract specific information from that host domain name. Next, an IP address for a special content host for that host domain name is identified in step 907. In the simplest embodiment, there may be a particular special content host IP address specified for all nonexistent host domain names. The identified IP address is returned to the client application in step 908.

The special locator host domain name may include specific information to be processed by the DNS server. For example, it may include a reference to a specific special content server as a part of the domain name, such as "RRRserver1RRR.subdomain.com". This is especially useful when the special locator includes only a host domain name without a path specifying the content. In such a case there may be a plurality of special content servers, each having different IP address, which may be referenced by a specific sequence included in the host domain name. While analyzing the host domain name, if a reference to a specific special content server is found therein, the IP address of the referenced special content server may be returned.

In another embodiment, there may be a plurality of special content hosts, each having different IP address, and the DNS server, when resolving the IP address of the special content server related to a particular special locator host domain name, may select (randomly or in a specific way) the IP address from a set of addresses. This may help in preventing identification of the IP address of a special content server or servers by content blocking applications.

Moreover, the special locator handler may cache data related to IP addresses resolved for requests from particular sources. When an IP address is to be resolved in response to a request from a cached source, the cached IP address may be returned instead of selecting a new IP address.

In another embodiment, the special locator handler may cache data related to IP addresses resolved for particular host domain names. When an IP address is to be resolved for a cached host domain name, the cached IP address may be returned instead of selecting a new IP address.

Such caching procedures may prevent the client applications from recognizing that the IP address of the special content host changes dynamically.

The advantage of the invention is that the special locators are transparent to client application, i.e. the client application is unaware of the type of the locator. The type of the locator is recognized only at the DNS host, which handles special locators using the special locator handler. Therefore, the special locators are undetectable by the client application. In particular, they are undetectable using current techniques based on analysis of host domain name included in the locator, since the special locator host domain name is at least in part random, therefore it is not possible to build a dictionary of special locator host domain names.

## Claims

1. A method for referencing a remote element of content in a networked environment, the method comprising the steps of:
locating within the content at least one remote element with a status of a special element, the special element to be referenced by a special locator comprising a special locator host domain name consisting of a sequence of characters of which at least one is randomly generated, followed by an existing top level domain name;
generating the special locator for the special element; and
providing the special locator as a reference to the special element.

2. The method according to claim 1, **characterized in that** the special locator is generated according to a template defining the placement of constant and random characters of the special locator.

3. The method according to claim 2, **characterized in that** some of the constant characters of the special locator define a sub-level domain name.

4. The method according to claim 2, **characterized in that** some of the constant characters of the special locator form a word existing in a language dictionary.

5. The method according to claim 1, **characterized in that** the special locator host domain name is followed by a path defining a particular content.

6. The method according to claim 5, **characterized in that** the path is the sequence of characters of which at least one is randomly generated.

7. A networked environment content comprising a plain sub-content related to at least one plain local element and/or plain remote element and generated by an application server responsively to a request from a user application, **characterized in that** additionally to the plain sub-content (103, 104, 105) comprises a special sub-content (102) related to at lease one remote element referenced by a special locator having a special locator host domain name consisting of a sequence of characters of which at least one is randomly generated, followed by an existing top level domain name.

8. The method according to claim 7, **characterized in that** the special locator is generated according to a template defining the placement of constant and random characters of the special locator.

9. The method according to claim 8, **characterized in that** some of the constant characters of the special locator define a sub-level domain name.

10. The method according to claim 8, **characterized in that** some of the constant characters of the special locator form a word existing in a language dictionary.

11. The method according to claim 7, **characterized in that** the special locator host domain name is followed by a path defining a particular content.

12. The method according to claim 11, **characterized in that** the path is the sequence of characters of which at least one is randomly generated.

13. A method for providing content with remote elements by an application server in response to a request for a base content from a client application in a networked environment, the method comprising the steps of:
identifying the structure of the requested base content;
identifying at least one of the remote elements as a special element;
providing a special locator as a reference to each special element, the special locator comprising a special locator host domain name consisting of a sequence of characters of which at least one is randomly generated, followed by an existing top level domain name; and
providing the special locator to the client application.

14. The method according to claim 13, **characterized in that** the structure of the requested base content is identified by a predefined base content template assigned to a specific request.

15. The method according to claim 13, **characterized in that** the structure of the requested base content is identified dynamically by a script.

16. The method according to claim 13, further comprising the steps of:
caching data related to special locators generated in response to requests from particular sources; and
providing the cached special locator when a special locator is to be provided in response to a request from a source for which a special locator is cached.

17. The method according to claim 13, further comprising the steps of:
caching data related to special locators generated for particular special elements; and
providing the cached special locator when a special locator is to be provided for a special element for which a special locator is cached.

18. A system for distributing content to client applications in a networked environment and comprising a base content host having an application server providing base content responsively to requests from client applications
**characterized in that**
the base content (242) comprises at least one special element, referenced by a special locator pointing to a special content (252), the special locator generated by a special locator generator (243, 415) of the base content host (240, 400), the special locator comprising a special locator host domain name consisting of a sequence of characters of which at least one is randomly generated, followed by an existing top level domain name,
and that that apart from the base content host (240, 400) the system comprises at least one special content host (250) having a special content host IP address and comprising an application server (251) providing the special content (252), responsively to requests from client applications,
and in addition the system comprises a DNS host (230) having a DNS server (231) handling a domain including a top level domain name of the special locator host domain name and a special locator handler (232) resolving IP addresses for host domain names not recognized by the DNS server (231) and returning a special content host IP address for the host domain names not recognized by the DNS server (231).

19. The system according to claim 18, **characterized in that** there is a plurality of special content hosts, each having a different IP address, and the special content host IP address for host domain names not recognized by the DNS server is selectably from a set of addresses.

20. The system according to claim 18, **characterized in that** in the special locator handler of the DNS host, the host domain name is analyzed and if a reference to a specific special content server is found therein, the IP address of the referenced special content server is returned.

21. The system according to claim 18, **characterized in that** in the special locator handler of the DNS host, data related to IP addresses resolved for requests from particular sources is cached, and when an IP address is to be resolved in response to a request from a cached source, the cached IP address is returned.

22. The system according to claim 18, **characterized in that** in the special locator handler of the DNS host, data related to IP addresses resolved for particular host domain names is cached, and when an IP address is to be resolved for a cached host domain name, the cached IP address is returned.
